# EUROPÄISCHE PATENTSCHRIFT

(11) **EP 4 367 008 B1**
(45) Veröffentlichungstag und Bekanntmachung des Hinweises auf die Patenterteilung: **20.08.2025**
(21) Anmeldenummer: 22728957.6
(22) Anmeldetag: 08.06.2022
(51) Int. Cl.: B62J 45/41, B62J 45/412, B62J 9/30, B62H 5/00

(54) **VERFAHREN UND VORRICHTUNG ZUR SITZBANKENTRIEGELUNG EINES EINSPURIGEN KRAFTFAHRZEUGS**
METHOD AND DEVICE FOR UNLOCKING A SEAT BENCH OF A SINGLE-TRACK MOTOR VEHICLE
PROCÉDÉ ET DISPOSITIF DE DÉVERROUILLAGE D'UN BANC DE SIÈGE D'UN VÉHICULE AUTOMOBILE À VOIE UNIQUE

(30) Priorität: 09.07.2021 DE 102021117748
(43) Veröffentlichungstag der Anmeldung: 15.05.2024
(73) Patentinhaber: Bayerische Motoren Werke Aktiengesellschaft, 80809 München (DE)
(72) Erfinder: STRASSER, Dieter, 82386 Oberhausen (DE); ISING, Christian, 80687 München (DE)
(86) Internationale Anmeldenummer: PCT/EP2022/065550
(87) Internationale Veröffentlichungsnummer: WO 2023/280501

(56) Entgegenhaltungen:
- EP-A1- 3 747 748
- DE-A1- 102015 203 696
- JP-A- H 107 053
- US-A1- 2007 247 280

## Beschreibung

### Beschreibung:

Die Erfindung betrifft ein Verfahren zur Entriegelung einer Sitzbank eines einspurigen Kraftfahrzeugs mit wenigstens einem Aktuator zur Entriegelung und zur Verriegelung der Sitzbank mittels eines Verriegelungselements. Außerdem betrifft die Erfindung eine Vorrichtung zur Durchführung des Verfahrens.

Die Sitzbankentriegelung eines einspurigen Kraftfahrzeugs erfolgt üblicherweise durch Öffnen eines Schlosses mittels des Zündschlüssels. Ferner muss die Entriegelung oftmals mit einer umständlichen Zweihandbedienung erfolgen. Für den Fahrer des einspurigen Kraftfahrzeugs ist es daher äußerst unkomfortabel, wenn er beispielsweise die Sitzbank öffnen will, um einen Gegenstand aus einen Staufach unter der Sitzbank zu entnehmen.

Druckschriftlicher Stand der Technik im vorliegenden technischen Gebiet ist in den Dokumenten EP 3 747 748 A1, JP H10 7053 A,
DE 10 2015 203 696 A1 und US 2007/247 280 A1 offenbart.

Es ist daher Aufgabe der vorliegenden Erfindung, eine Vorrichtung sowie ein Verfahren zur Sitzbankentriegelung bereitzustellen, welche/s die Sitzbankentriegelung für einen Fahrer optimiert und vereinfacht.

Diese Aufgabe wird durch die Merkmalskombination gemäß Patentanspruch 1 gelöst.

Erfindungsgemäß wird ein Verfahren zur Entriegelung einer Sitzbank eines einspurigen Kraftfahrzeugs oder eines Quads, mit wenigstens einem Aktuator zur Entriegelung und zur Verriegelung der Sitzbank mittels eines Verriegelungselements vorgeschlagen. Dabei ist an der Sitzbank ein Betätigungselement für den Aktuator ausgebildet. Ferner weist das einspurige Kraftfahrzeug eine Sensorik zum Erfassen aktueller Betriebsparameter des einspurigen Kraftfahrzeugs und ein Steuergerät zur Regelung des Aktuators auf. In dem Steuergerät ist außerdem wenigstens ein vorbestimmter Wert für die entsprechenden Betriebsparameter hinterlegt ist. Das Verfahren umfasst zunächst ein kontinuierliches Erfassen der entsprechenden Betriebsparameter mittels der Sensorik und anschließend ein Vergleichen der erfassten Betriebsparameter mit dem jeweiligen entsprechenden vorbestimmten Wert mittels des Steuergeräts. Wenn beim Vergleichen der erfasste Betriebsparameter dem entsprechenden vorbestimmten Wert entspricht und ein Fahrer das Betätigungselement betätigt, regelt das Steuergerät den Aktuator derart, dass die Sitzbank mittels des Verriegelungselements entriegelt wird.

Vorteilhaft daran ist, dass aufgrund der Bedingung für eine Entriegelung der Sitzbank diese nicht versehentlich entriegelt wird. Ferner wird die Sitzbank automatisch entriegelt und kann bequem und direkt entnommen werden. Dadurch ist die Handhabung für den Fahrer optimiert.

In einer vorteilhaften Ausführungsvariante ist vorgesehen, dass das Betätigungselement ein Griff, ein Hebel, ein Sensor, eine Induktionsschleife, ein Schalter oder ein Druckknopf ist. Besonders bevorzugt ist dabei eine Induktionsschleife. Auf diese Weise wird die Sitzbank durch Anfassen der Sitzbank an den dafür vorgesehenen Bereichen automatisch entriegelt wodurch die Handhabung der Entriegelung der Sitzbank für den Fahrer weiter optimiert wird.

Vorzugsweise wird beim Erfassen als Betriebsparameter ein Status einer Zündung des einspurigen Kraftfahrzeugs ermittelt wird und der wenigstens eine Wert ist eine eingeschaltete Zündung. Dadurch kann die Sitzbank nur entriegelt werden, wenn die Zündung eingeschalten ist.

In einem Ausführungsbeispiel des Verfahrens ist vorgesehen, dass beim Erfassen als Betriebsparameter ein detektierter Funkschlüssel ermittelt wird und der wenigstens eine Wert ein detektierter Funkschlüssel ist, welcher sich innerhalb eines vorbestimmten Abstands zu einem Funkempfänger des einspurigen Kraftfahrzeugs befindet, insbesondere innerhalb von 2 Metern, weiter insbesondere innerhalb von einem Meter. Vorteilhaft daran ist, dass die Sitzbank durch Betätigen des Betätigungselements entriegelt werden kann, sobald sich der Fahrer mit dem Funkschlüssel in der Umgebung des einspurigen Kraftfahrzeugs aufhält, wodurch der Bedienungskomfort für den Fahrer weiter verbessert wird.

In einer alternativen Ausführung ist vorgesehen, dass beim Erfassen als Betriebsparameter ein Status eines Zündschlosses des einspurigen Kraftfahrzeugs ermittelt wird und der wenigstens eine Wert ein in dem Zündschloss eingesteckter Schlüssel ist. Dadurch wird bei einer Ausführung des einspurigen Kraftfahrzeugs ohne einen Funkschlüssel sichergestellt, dass die Sitzbank nur entriegelt wird, wenn der Fahrer in Besitz des Zündschlüssels ist und diesen in das Zündschloss steckt.

Erfindungsgemäß ist vorgesehen, dass beim Erfassen als Betriebsparameter eine Raddrehzahl des einspurigen Kraftfahrzeugs ermittelt wird und der wenigstens eine Wert eine Raddrehzahl von 0 ist. Auf diese Weise wird verhindert, dass die Sitzbank versehentlich während der Fahrt mit dem Motorrad entriegelt wird und somit die Sicherheit für den Fahrer erhöht.

Ferner ist eine Ausführung günstig, bei welcher die Sitzbank einen Belegungssensor aufweist und beim Erfassen als Betriebsparameter eine Belegung der Sitzbank und eine Motordrehzahl des einspurigen Kraftfahrzeugs ermittelt werden. Dabei sind der wenigstens eine Wert eine unbelegte Sitzbank und eine Motordrehzahl größer 0. Vorteilhaft daran ist, dass die Sitzbank trotz eines laufenden Motors entriegelt werden kann, nachdem aufgrund des Belegungssensors sichergestellt ist, dass kein Fahrer auf dem einspurigen Kraftfahrzeug sitzt.

In einer bevorzugten Ausführungsform des Verfahrens weist die Sitzbank einen Elektromotor auf und nach dem Entriegeln wird die Sitzbank mittels des Elektromotors geöffnet. Dadurch öffnet sich die Sitzbank nach dem Entriegeln automatisch, wodurch die Handhabung für den Fahrer weiter optimiert ist.

Erfindungsgemäß wird ferner eine Vorrichtung zur Durchführung eines Verfahrens zur Entriegelung und Verriegelung einer Sitzbank eines einspurigen Kraftfahrzeugs gemäß der vorstehenden Offenbarung, mit wenigstens einem Aktuator zur Entriegelung und zur Verriegelung der Sitzbank mittels eines Verriegelungselements vorgeschlagen. An der Sitzbank ist ein Betätigungselement für den Aktuator ausgebildet und das einspurige Kraftfahrzeug weist eine Sensorik zum Erfassen aktueller Betriebsparameter des einspurigen Kraftfahrzeugs und ein Steuergerät zur Regelung des Aktuators auf. Ferner ist in dem Steuergerät wenigstens ein vorbestimmter Wert für die entsprechenden Betriebsparameter hinterlegt und, wenn der erfasste Betriebsparameter dem entsprechenden vorbestimmten Wert entspricht sowie das Betätigungselement betätigt ist, der Aktuator mittels des Steuergeräts derart regelbar, dass die Sitzbank mittels des Verriegelungselements entriegelt ist.

Die vorstehend offenbarten Merkmale sind beliebig kombinierbar, soweit dies technisch möglich ist und diese nicht im Widerspruch zueinander stehen.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
- Fig. 1: eine schematische Ansicht einer Vorrichtung zur Durchführung eines Verfahrens zur Entriegelung und Verriegelung einer Sitzbank eines einspurigen Kraftfahrzeugs und
- Fig. 2: ein Schaltbild eines Verfahrens zur Entriegelung einer Sitzbank eines einspurigen Kraftfahrzeugs mit der Vorrichtung.

Die Figuren sind beispielhaft schematisch. Gleiche Bezugszeichen in den Figuren weisen auf gleiche funktionale und/oder strukturelle Merkmale hin.

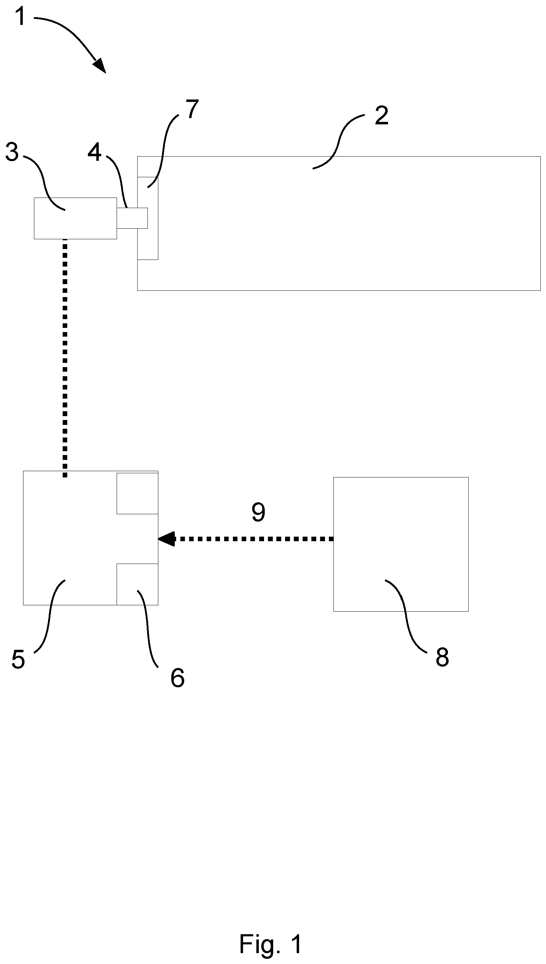

In Figur 1 ist eine schematische Ansicht einer Vorrichtung 1 zur Durchführung eines Verfahrens zur Entriegelung und Verriegelung einer Sitzbank 2 eines einspurigen Kraftfahrzeugs dargestellt.

Die Vorrichtung 1 umfasst einen Aktuator 3 zur Entriegelung und zur Verriegelung der Sitzbank 2 mittels eines Verriegelungselements 4. An der Sitzbank 2 ist ferner ein Betätigungselement 7 für den Aktuator 3 ausgebildet. Außerdem weist das einspurige Kraftfahrzeug eine Sensorik 8 zum Erfassen aktueller Betriebsparameter 9 des einspurigen Kraftfahrzeugs und ein Steuergerät 5 zur Regelung des Aktuators 3 auf. In dem Steuergerät 5 sind vorbestimmte Werte 6 für die entsprechenden Betriebsparameter 9 hinterlegt. Darüber hinaus ist, wenn der erfasste Betriebsparameter 9 dem entsprechenden vorbestimmten Wert 6 entspricht und das Betätigungselement 7 betätigt ist, der Aktuator 3 mittels des Steuergeräts 5 derart regelbar, dass die Sitzbank 2 mittels des Verriegelungselements 4 entriegelt ist. Das Betätigungselement 7 ist dabei eine Induktionsschleife, welche in eine Griffmulde der Sitzbank 2 angeordnet ist.

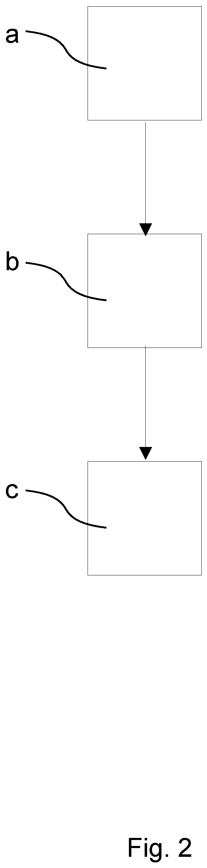

Figur 2 zeigt ein Schaltbild eines Verfahrens zur Entriegelung einer Sitzbank 2 eines einspurigen Kraftfahrzeugs mit der vorstehend beschriebenen Vorrichtung 1. Dabei umfasst das Verfahren mit Schritt a) zunächst ein kontinuierliches Erfassen der entsprechenden Betriebsparameter 9 mittels der Sensorik 8 und mit Schritt b) anschließend ein Vergleichen der erfassten Betriebsparameter 9 mit dem jeweiligen entsprechenden vorbestimmten Wert 6 mittels des Steuergeräts 5.

Wenn beim Vergleichen der erfasste Betriebsparameter 9 dem entsprechenden vorbestimmten Wert 6 entspricht und ein Fahrer das Betätigungselement 7 betätigt, regelt das Steuergerät 5 daraufhin in Schritt c) den Aktuator 3 derart, dass die Sitzbank 2 mittels des Verriegelungselements 4 entriegelt wird. Sofern eine der erfassten Betriebsparameter 9 von dem entsprechenden vorbestimmten Wert 6 abweicht erfolgt keine Entriegelung der Sitzbank.

Beim Erfassen wird als Betriebsparameter 9 ein Status einer Zündung des einspurigen Kraftfahrzeugs ermittelt und der entsprechende Wert 6 ist eine eingeschaltete Zündung. Ferner wird als Betriebsparameter 9 ein detektierter Funkschlüssel ermittelt und der korrespondierende Wert 6 ist ein detektierter Funkschlüssel, welcher sich innerhalb eines vorbestimmten Abstands zu der Sitzbank 2 bzw. dem einspurigen Kraftfahrzeug befindet, vorzugsweise innerhalb von einem Meter. Darüber hinaus wird als Betriebsparameter 9 eine Raddrehzahl des einspurigen Kraftfahrzeugs ermittelt und der zugehörige Wert 6 ist eine Raddrehzahl von 0.

Darüber hinaus weist die Sitzbank 2 einen Belegungssensor auf und beim Erfassen werden als Betriebsparameter 9 eine Belegung der Sitzbank 2 und eine Motordrehzahl des einspurigen Kraftfahrzeugs ermittelt. Dabei sind die Werte 6 eine unbelegte Sitzbank 2 und eine Motordrehzahl größer 0. Außerdem umfasst die Sitzbank einen Elektromotor und nach dem Entriegeln wird die Sitzbank 2 mittels des Elektromotors geöffnet.

Die Erfindung beschränkt sich in ihrer Ausführung nicht auf die vorstehend angegebenen bevorzugten Ausführungsbeispiele. Vielmehr ist eine Anzahl von Varianten denkbar, welche von der dargestellten Lösung auch bei grundsätzlich anders gearteten Ausführungen Gebrauch macht.

## Patentansprüche

1. Verfahren zur Entriegelung einer Sitzbank (2) eines einspurigen Kraftfahrzeugs mit wenigstens einem Aktuator (3) zur Entriegelung und zur Verriegelung der Sitzbank (2) mittels eines Verriegelungselements (4), wobei an der Sitzbank (2) ein Betätigungselement (7) für den Aktuator (3) ausgebildet ist, wobei das einspurige Kraftfahrzeug eine Sensorik (8) zum Erfassen aktueller Betriebsparameter (9) des einspurigen Kraftfahrzeugs und ein Steuergerät (5) zur Regelung des Aktuators (3) aufweist, wobei in dem Steuergerät (5) wenigstens ein vorbestimmter Wert (6) für die entsprechenden Betriebsparameter (9) hinterlegt ist, welches die Schritte umfasst:
a. Kontinuierliches Erfassen der entsprechenden Betriebsparameter (9) mittels der Sensorik (8),
b. Vergleichen der erfassten Betriebsparameter (9) mit dem jeweiligen entsprechenden vorbestimmten Wert (6) mittels des Steuergeräts (5),
wobei, wenn beim Vergleichen der erfasste Betriebsparameter (9) dem entsprechenden vorbestimmten Wert (6) entspricht und ein Fahrer das Betätigungselement (7) betätigt, das Steuergerät (5) den Aktuator (3) derart regelt, dass die Sitzbank (2) mittels des Verriegelungselements (4) entriegelt wird, **dadurch gekennzeichnet, dass** beim Erfassen als Betriebsparameter (9) eine Raddrehzahl des einspurigen Kraftfahrzeugs ermittelt wird und der wenigstens eine Wert (6) eine Raddrehzahl von 0 ist.

2. Verfahren gemäß Anspruch 1, wobei das Betätigungselement (7) ein Griff, ein Hebel, ein Sensor, eine Induktionsschleife, ein Schalter oder ein Druckknopf ist.

3. Verfahren gemäß einem der Ansprüche 1 oder 2, wobei beim Erfassen als Betriebsparameter (9) ein Status einer Zündung des einspurigen Kraftfahrzeugs ermittelt wird und der wenigstens eine Wert (6) eine eingeschaltete Zündung ist.

4. Verfahren gemäß einem der vorhergehenden Ansprüche, wobei beim Erfassen als Betriebsparameter (9) ein detektierter Funkschlüssel ermittelt wird und der wenigstens eine Wert (6) ein detektierter Funkschlüssel ist, welcher sich innerhalb eines vorbestimmten Abstands zu einem Funkempfänger des einspurigen Kraftfahrzeugs befindet, insbesondere innerhalb von 2 Metern, weiter insbesondere innerhalb von einem Meter.

5. Verfahren gemäß einem der Ansprüche 1 bis 3, wobei beim Erfassen als Betriebsparameter (9) ein Status eines Zündschlosses des einspurigen Kraftfahrzeugs ermittelt wird und der wenigstens eine Wert (6) ein in dem Zündschloss eingesteckter Schlüssel ist.

6. Verfahren gemäß einem der vorhergehenden Ansprüche, wobei die Sitzbank (2) einen Belegungssensor aufweist und beim Erfassen als Betriebsparameter (9) eine Belegung der Sitzbank (2) und eine Motordrehzahl des einspurigen Kraftfahrzeugs ermittelt werden, wobei der wenigstens eine Wert (6) eine unbelegte Sitzbank (2) und eine Motordrehzahl größer 0 sind.

7. Verfahren gemäß einem der vorhergehenden Ansprüche, wobei die Sitzbank einen Elektromotor aufweist und nach dem Entriegeln die Sitzbank (2) mittels des Elektromotors geöffnet wird.

8. Vorrichtung (1) zur Durchführung eines Verfahrens zur Entriegelung und Verriegelung einer Sitzbank (2) eines einspurigen Kraftfahrzeugs gemäß einem der vorhergehenden Ansprüche, mit wenigstens einem Aktuator (3) zur Entriegelung und zur Verriegelung der Sitzbank (2) mittels eines Verriegelungselements (4), wobei an der Sitzbank (2) ein Betätigungselement (7) für den Aktuator (3) ausgebildet ist, wobei das einspurige Kraftfahrzeug eine Sensorik (8) zum Erfassen aktueller Betriebsparameter (9) des einspurigen Kraftfahrzeugs und ein Steuergerät (5) zur Regelung des Aktuators (3) aufweist, wobei in dem Steuergerät (5) wenigstens ein vorbestimmter Wert (6) für die entsprechenden Betriebsparameter (9) hinterlegt ist, wobei, wenn der erfasste Betriebsparameter (9) dem entsprechenden vorbestimmten Wert (6) entspricht und das Betätigungselement (7) betätigt ist, der Aktuator (3) mittels des Steuergeräts (5) derart regelbar ist, dass die Sitzbank (2) mittels des Verriegelungselements (4) entriegelt ist, **dadurch gekennzeichnet, dass** als Betriebsparameter (9) eine Raddrehzahl des einspurigen Kraftfahrzeugs ermitteltbar ist und der wenigstens eine Wert (6) eine Raddrehzahl von 0 ist.

## Claims

1. Method for unlocking a seat bench (2) of a single-track motor vehicle, using at least one actuator (3) for unlocking and for locking the seat bench (2) by means of a locking element (4), wherein an actuating element (7) for the actuator (3) is formed on the seat bench (2), wherein the single-track motor vehicle has sensors (8) for detecting current operating parameters (9) of the single-track motor vehicle and a controller (5) for controlling the actuator (3), wherein at least one specified value (6) for the corresponding operating parameters (9) is stored in the controller (5), which method comprises the steps of:
a. continuously detecting the corresponding operating parameters (9) by means of the sensors (8),
b. comparing the detected operating parameters (9) with the respective corresponding specified value (6) by means of the controller (5),
wherein if, in the comparison, the detected operating parameter (9) corresponds to the corresponding specified value (6) and a driver actuates the actuating element (7), the controller (5) controls the actuator (3) in such a way that the seat bench (2) is unlocked by means of the locking element (4), **characterized in that** a wheel rotational speed of the single-track motor vehicle is determined as the operating parameter (9) during the detection, and the at least one value (6) is a wheel rotational speed of 0.

2. Method according to Claim 1, wherein the actuating element (7) is a handle, a lever, a sensor, an induction loop, a switch or a pushbutton.

3. Method according to either of Claims 1 and 2, wherein a status of an ignition of the single-track motor vehicle is determined as the operating parameter (9) during the detection, and the at least one value (6) is an ignition switched on.

4. Method according to one of the preceding claims, wherein a detected radio key is determined as the operating parameter (9) during the detection, and the at least one value (6) is a detected radio key which is located within a specified distance from a radio receiver of the single-track motor vehicle, in particular within 2 metres, more particularly within one metre.

5. Method according to one of Claims 1 to 3, wherein a status of an ignition lock of the single-track motor vehicle is determined as the operating parameter (9) during the detection, and the at least one value (6) is a key inserted into the ignition lock.

6. Method according to one of the preceding claims, wherein the seat bench (2) has an occupancy sensor and occupation of the seat bench (2) and a motor speed of the single-track motor vehicle are determined as operating parameters (9) during the detection, wherein the at least one value (6) is an unoccupied seat bench (2) and a motor speed of greater than 0.

7. Method according to one of the preceding claims, wherein the seat bench has an electric motor and, after the unlocking, the seat bench (2) is opened by means of the electric motor.

8. Device (1) for carrying out a method for unlocking and for locking a seat bench (2) of a single-track motor vehicle according to one of the preceding claims, having at least one actuator (3) for unlocking and for locking the seat bench (2) by means of a locking element (4), wherein an actuating element (7) for the actuator (3) is formed on the seat bench (2), wherein the single-track motor vehicle has sensors (8) for detecting current operating parameters (9) of the single-track motor vehicle and a controller (5) for controlling the actuator (3), wherein at least one specified value (6) for the corresponding operating parameters (9) is stored in the controller (5), wherein, if the detected operating parameter (9) corresponds to the corresponding specified value (6) and the actuating element (7) is actuated, the actuator (3) is controllable by means of the controller (5) in such a way that the seat bench (2) is unlocked by means of the locking element (4), **characterized in that** a wheel rotational speed of the single-track motor vehicle is determinable as the operating parameter (9), and the at least one value (6) is a wheel rotational speed of 0.

## Revendications

1. Procédé de déverrouillage d'un banc de siège (2) d'un véhicule automobile à voie unique comprenant au moins un actionneur (3) pour le déverrouillage et le verrouillage du banc de siège (2) au moyen d'un élément de verrouillage (4), un élément d'actionnement (7) pour l'actionneur (3) étant formé sur le banc de siège (2), le véhicule automobile à voie unique comportant un système de détection (8) pour détecter des paramètres de fonctionnement actuels (9) du véhicule automobile à voie unique et un dispositif de commande (5) pour commander l'actionneur (3), au moins une valeur spécifiée (6) pour les paramètres de fonctionnement correspondants (9) étant stockée dans le dispositif de commande (5), lequel procédé comprend les étapes consistant à :
a. détecter en continu les paramètres de fonctionnement correspondants (9) au moyen du système de détection (8),
b. comparer les paramètres de fonctionnement détectés (9) à la valeur spécifiée correspondante (6) respective au moyen du dispositif de commande (5),
dans lequel, si, lors de la comparaison du paramètre de fonctionnement détecté (9), le paramètre de fonctionnement correspond à la valeur spécifiée correspondante (6) et un conducteur actionne l'élément d'actionnement (7), le dispositif de commande (5) commande l'actionneur (3) de telle sorte que le banc de siège (2) soit déverrouillé au moyen de l'élément de verrouillage (4), **caractérisé en ce que**, lors de la détection, une vitesse de rotation de roue du véhicule automobile à voie unique est déterminée en tant que paramètre de fonctionnement (9), et ladite au moins une valeur (6) est une vitesse de rotation de roue égale à 0.

2. Procédé selon la revendication 1, dans lequel l'élément d'actionnement (7) est une poignée, un levier, un capteur, une boucle d'induction, un interrupteur ou un bouton-poussoir.

3. Procédé selon l'une quelconque des revendications 1 ou 2, dans lequel, lors de la détection, un état d'allumage du véhicule automobile à voie unique est déterminé en tant que paramètre de fonctionnement (9), et ladite au moins une valeur (6) est un allumage activé.

4. Procédé selon l'une quelconque des revendications précédentes, dans lequel, lors de la détection, une clé radio détectée est déterminée en tant que paramètre de fonctionnement (9), et ladite au moins une valeur (6) est une clé radio détectée, laquelle se trouve à moins d'une distance prédéfinie d'un récepteur radio du véhicule automobile à voie unique, en particulier à moins de 2 mètres, plus particulièrement à moins d'un mètre.

5. Procédé selon l'une quelconque des revendications 1 à 3, dans lequel, lors de la détection, un état d'un contacteur d'allumage du véhicule automobile à voie unique est déterminé en tant que paramètre de fonctionnement (9), et ladite au moins une valeur (6) est une clé insérée dans le contacteur d'allumage.

6. Procédé selon l'une quelconque des revendications précédentes, dans lequel le banc de siège (2) comprend un capteur d'occupation et, lors de la détection, une occupation du banc de siège (2) et une vitesse de rotation du moteur du véhicule automobile à voie unique sont déterminées en tant que paramètres de fonctionnement (9), ladite au moins une valeur (6) étant un banc de siège (2) inoccupé et une vitesse de rotation du moteur supérieure à 0.

7. Procédé selon l'une quelconque des revendications précédentes, dans lequel le banc de siège comprend un moteur électrique et, après le déverrouillage, le banc de siège (2) est ouvert au moyen du moteur électrique.

8. Dispositif (1) pour la mise en œuvre d'un procédé de déverrouillage et de verrouillage d'un banc de siège (2) d'un véhicule automobile à voie unique selon l'une quelconque des revendications précédentes, comprenant au moins un actionneur (3) pour le déverrouillage et le verrouillage du banc de siège (2) au moyen d'un élément de verrouillage (4), un élément d'actionnement (7) pour l'actionneur (3) étant formé sur le banc de siège (2), le véhicule automobile à voie unique comportant un système de détection (8) pour détecter des paramètres de fonctionnement (9) actuels du véhicule automobile à voie unique et un dispositif de commande (5) pour commander l'actionneur (3), au moins une valeur spécifiée (6) pour les paramètres de fonctionnement correspondants (9) étant stockée dans le dispositif de commande (5), dans lequel, si le paramètre de fonctionnement détecté (9) correspond à la valeur spécifiée correspondante (6) et si l'élément d'actionnement (7) est actionné, l'actionneur (3) peut être commandé au moyen du dispositif de commande (5) de telle sorte que le banc de siège (2) soit déverrouillé au moyen de l'élément de verrouillage (4), **caractérisé en ce qu'**une vitesse de rotation de roue du véhicule automobile à voie unique peut être déterminée en tant que paramètre de fonctionnement (9) et ladite au moins une valeur (6) est une vitesse de rotation de roue égale à 0.
